# EUROPÄISCHE PATENTSCHRIFT

(11) **EP 1 051 323 B1**
(45) Veröffentlichungstag und Bekanntmachung des Hinweises auf die Patenterteilung: **19.09.2001**
(21) Anmeldenummer: 98965869.5
(22) Anmeldetag: 23.12.1998
(51) Int. Cl.: B62D 65/00, B23P 21/00, B23P 19/00

(54) **VERFAHREN ZUR HERSTELLUNG VON TÜREN, KLAPPEN ODER EINZELTEILEN AUS BLECH IM KFZ-KAROSSERIEROHBAU**
METHOD FOR PRODUCING DOORS, HOODS OR SINGLE PARTS MADE OF SHEET METAL IN AUTOMOTIVE BODYSHELLS
PROCEDE POUR LA FABRICATION DE PORTIERES, DE HAYONS OU DE PIECES EN TOLE DANS LA COQUE DE VEHICULES AUTOMOBILES

(30) Priorität: 26.01.1998 DE 19802783; 30.04.1998 DE 19819362
(43) Veröffentlichungstag der Anmeldung: 15.11.2000
(73) Patentinhaber: THYSSEN INDUSTRIE AG, 45128 Essen (DE)
(72) Erfinder: LIEWALD, Mathias, D-54292 Trier (DE); THOMS, Volker, D-75365 Calw (DE); BOGON, Peter, 10587 Berlin (DE)
(74) Vertreter: Dahlkamp, Heinrich-Leo, Dipl.-Ing.
(86) Internationale Anmeldenummer: EP9808428
(87) Internationale Veröffentlichungsnummer: WO9937526

(56) Entgegenhaltungen:
- EP-A- 0 594 884
- EP-A- 0 737 543
- US-A- 4 441 645

## Beschreibung

Die Erfindung bezieht sich auf ein Verfahren zur Herstellung von Türen, Klappen oder Einzelteilen aus Blech im Kfz-Karosserierohbau gemäß Oberbegriff des Anspruches 1.

Es gehört zum Stand der Technik, die Bleche für den Karosseriebau in einer Presseneinrichtung umzuformen und anschließend auf Ladungsträgern zwischenzulagern. Diese Preßeinrichtungen haben eine in der Regel kürzere Taktzeit als die Rohbauzellen, in denen die umgeformten Bleche für den unmittelbaren Anbau an die Karosserie zusammengefügt werden. Bei den zum Stand der Technik gehörigen Preßeinrichtungen werden für jede Preßlosgröße die Ober- und Unterwerkzeuge ausgetauscht. Da dieser Austausch nur in größeren Abständen erfolgen kann, muss hierbei zunächst ein ausreichender Vorrat an umgeformten Teilen hergestellt werden, bevor ein Werkzeugwechsel stattfinden kann. Den an sich bekannten Rohbauzellen werden je nach Bedarf die Ladungsträger mit den umgeformten Teilen zugeführt. In diesen Rohbauzellen werden dann die vorgeformten Bleche zueinander positioniert (geschachtelt), mit Kleber versehen, zusammengefügt und durch Falzen miteinander verbunden. Darüber hinaus können die Bleche auch noch miteinander verschweißt werden, vorzugsweise durch Laserschweißen oder Widerstandspunktschweißen. Die auf diese Weise zusammengefügten Bleche, vorzugsweise Türen oder Klappen werden dann in der Rohbaulinie mit der Karosserie verbunden.

Aufgabe der Erfindung ist es ein gattungsgemäßes Verfahren vorzugschlagen, bei dem die Preßeinrichtung vereinfacht werden kann und das aufwendige Zwischenlagern von umgeformten Preßteilen vermieden werden kann.

Die Lösung dieser Aufgabe ist im Patentanspruch 1 angegeben. Die Unteransprüche 2 bis 4 enthalten sinnvolle Ausführungsformen dazu.

Erfindungsgemäß werden die Blechplatinen in Einzweckumformzellen mit integriertem Werkzeug umgeformt. Bei diesen Einzweckumformzellen handelt es sich um vergleichsweise einfache Preßvorrichtungen, wobei Werkzeugunterteil und -oberteil jeweils den Pressentisch bzw. den Pressenstößel bilden. Diese Einzweckumformzelle ist dabei prinzipiell nur zur Fertigung eines einzigen Preßteils vorgesehen. Die Umformung in der Einzweckumformzelle erfolgt erfindungsgeäß taktgleich mit der Rohbaufertigung, sodass die umgeformten Teile unmittelbar bzw. ohne Zwischenlagerung direkt in die Rohbauzelle gegeben werden können und dort mit anderen Teilen, insbesondere Preßteilen aus einer parallelen Einzweckumformzelle zusammengefügt werden können. Die umgeformten Teile können aber auch direkt aus der Einzweckumformzelle mit der Karosse auf der Rohbaulinie zusammengefügt werden.

Es hat sich außerdem als günstig erwiesen, mehrere erfindungsgemäße Umformeinheiten in Kombination mit ein oder mehreren Rohbauzellen zu betreiben. Es können auch den einzelnen Rohbauzellen mehrere Einzweckumformzellen zugeordnet werden, die Teile für verschiedene Modelle umformen. Insgesamt sieht das erfindungsgemäße Verfahren vor, dass die Umformung in den Einzweckumformzellen und der Zusammenbau der Türen oder Klappen taktgleich in einem Gesamtsystem erfolgt. Auf eine aufwendige Zwischenstapelung der umgeformten Bleche kann hierbei verzichtet werden.

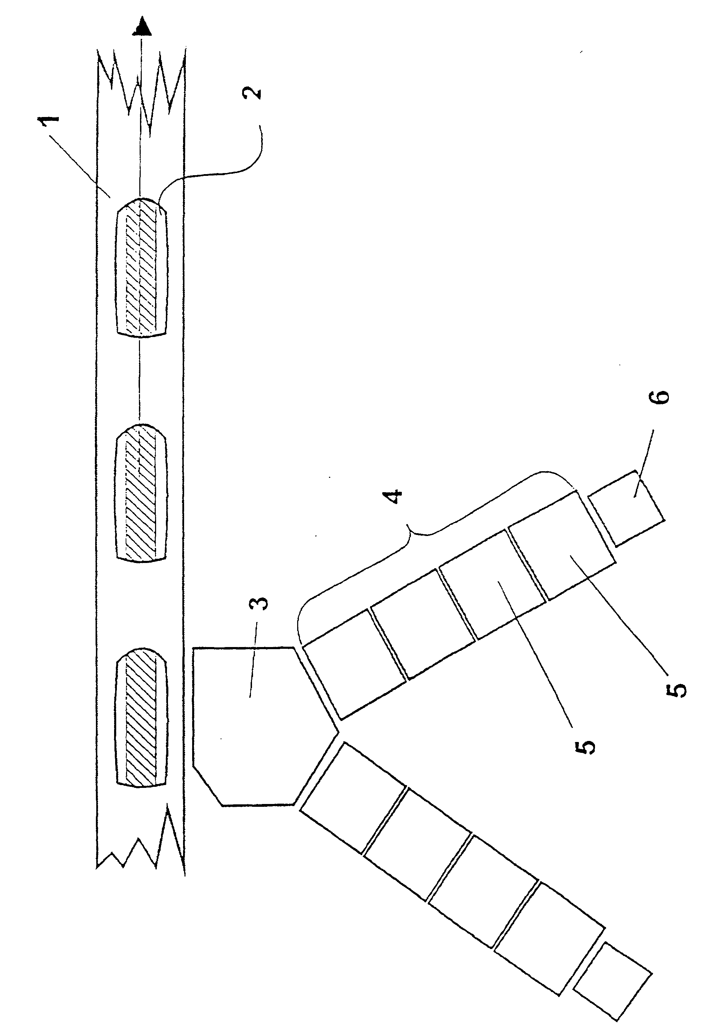

Die Erfindung wird anhand der beigefügten Figur beispielsweise näher erläutert. Die Figur zeigt schematisch eine Türenfertigung. Hierbei werden die ebenen Blechplatinen, z.B. Tailord Blanks, nachdem sie durch Laserschweißen hergestellt werden sind, auf einem Platinenstapel 6 direkt vor der ersten Umformzelle 5 der Einzweckumformzelle 4 positioniert. Nach Durchführen der einzelnen Umformschritte, im vorliegenden Fall sind vier Einzelschritte dargestellt, werden die umgeformten Preßteile direkt und ohne Zwischenlagerung der Rohbauzelle 3 zugeführt. In der Rohbauzelle werden sie dann mit anderen gegebenenfalls vorgeformten Preßteilen in an sich bekannter Weise geschachtelt, gefalzt und gegebenenfalls durch Laserschweißen oder Widerstandspunktschweißen fest miteinander verbunden. Aus der Rohbauzelle 3 werden die fertigen Türen dann mit Hilfe eines Roboters, der vorzugsweise um eine senkrechte Achse gedreht wird, mit den auf der Rohbaulinie 1 angeordneten Rohkarossen 2 verbunden.

### Bezugszeichenliste:

- 1: Rohbaulinie
- 2: Rohkarosse
- 3: Rohbauzelle zum Schachteln,
Gelieren, Falzen etc. von Blechen
- 4: Einzweckumformzelle
- 5: Einzelumformzelle
- 6: Platinenstapel

## Patentansprüche

1. Verfahren zur Herstellung von Türen, Klappen oder Einzelteilen aus Blech im Kfz-Karosserierohbau, wobei ebene Blechplatinen als Halbzeug in Umformeinheiten oder Umformlinien umgeformt werden, die umgeformten Bleche in einer Rohbauzelle (3) oder in der Rohbaulinie (1) mit anderen Blechen durch vorzugsweise Schachteln, Gelieren, Falzen und gegebenenfalls Schweißen verbunden werden, **dadurch gekennzeichnet, dass** die Platinen in Einzweckumformzellen (4) mit integriertem Werkzeug taktgleich mit der Rohbaufertigung umgeformt und die umgeformten Preßteile unmittelbar ohne Zwischenlagerung in die Rohbauzelle (3) oder die Rohbaulinie (1) zum Fügen mit anderen Preßteilen oder sonstigen Blechen oder zum direkten Verbinden mit der Karosserie (2) transportiert werden.

2. Verfahren nach Anspruch 1, **dadurch gekennzeichnete, dass** die in Einzweckumformzellen vorgeformten Preßteile in der Rohbauzelle (3) mit weiteren gegebenenfalls vorgeformten Einzelteilen, die aus Ladungsträgern entnommen werden, zusammengefügt werden.

3. Verfahren nach Anspruch 1 oder 2, **dadurch gekennzeichnet, dass** mehrere Umformeinheiten oder Umformlinien in Kombination mit einer oder mehreren Rohbauzellen betrieben werden.

4. Verfahren nach Anspruch 1, 2 oder 3, **dadurch gekennzeichnete, dass** den Rohbauzellen (3) für die verschiedenen Karosserieteile jeweils eigene Einzweckumformzellen (4) zugeordnet werden.

## Claims

1. A method for producing of doors, hoods, or single parts made of sheet metal plate in automotive bodyshell construction, with plain sheet metal blanks being reshaped as semi-finished goods in forming units or forming lines, and with the reshaped sheet metal plates being connected in a bodyshell cell (3) or in a bodyshell line (1) with other sheet metal plates preferably by nesting, jellying, folding and, if required, by welding, **characterised in that** the blanks are reshaped in integrated-tool single-purpose forming cells (4) at the same cycle as the bodyshell construction and that the reshaped pressed parts are transported directly without intermediate storage into the bodyshell cell (3) or bodyshell line (1) for joining them with other pressed parts or other sheet metal plates or for direct connection with the car body (2).

2. A method according to Claim 1, **characterised in that** the pressed parts preshaped in single-purpose forming cells are joined in the bodyshell cell (3) with other single parts also preshaped which are taken from charge carriers.

3. A method according to Claim 1 or 2, **characterised in that** several forming units or forming lines are operated in combination with one or more bodyshell cells.

4. A method according to Claim 1,2, or 3, **characterised in that** specific single-purpose forming cells (4) each are allocated to the bodyshell cells (3) for the various car body parts

## Revendications

1. Procédé pour la fabrication de portières, de hayons ou de pièces en tôle dans la coque de véhicules automobiles, des platines de tôle planes, en tant que produits semi-finis, étant formées dans des unités de formage ou des lignes de formage, les tôles formées étant assemblées dans une cellule de coque (3) ou dans une ligne de coque (1) à d'autres tôles de préférence par emboîtement, gélification, agrafage, et le cas échéant, par soudage, **caractérisé en ce que** les platines sont formées dans des cellules de formage à une seule utilisation (1) avec un outil intégré à la même cadence que la fabrication de la coque et que les pièces de carrosserie formées sont transportées immédiatement sans stockage intermédiaire dans la cellule de coque (3) ou dans la ligne de coque (1) pour être assemblées à d'autres pièces de carrosserie ou à d'autres tôles ou pour être assemblées directement à la carrosserie (2).

2. Procédé selon la revendication 1, **caractérisé en ce que** les pièces de carrosserie préformées dans des cellules de formage à une seule utilisation sont assemblées dans la cellule de coque (3) à d'autres pièces individuelles également préformées et prises dans des porteurs de charge.

3. Procédé selon la revendication 1 ou 2, **caractérisé en ce que** plusieurs unités de formage ou lignes de formage fonctionnent en combinaison avec une ou plusieurs cellules de coque.

4. Procédé selon la revendication 1, 2 ou 3, **caractérisé en ce que** les cellules de coque (3) pour les différentes parties de la carrosserie possèdent chacune leurs propres cellules de formage à une seule utilisation (4).
